# NEUE EUROPÄISCHE PATENTSCHRIFT

(11) **EP 0 630 556 B2**
(45) Veröffentlichungstag und Bekanntmachung des Hinweises auf die Entscheidung über den Einspruch: **31.07.2002**
(45) Hinweis auf die Patenterteilung: 03.12.1997
(21) Anmeldenummer: 94107612.7
(22) Anmeldetag: 17.05.1994
(51) Int. Cl.: A01J 7/00

(54) **Melkzeugarm**
Teat cups support arm
Bras de support de gobelets trayeurs

(30) Priorität: 17.05.1993 DE 4316460
(43) Veröffentlichungstag der Anmeldung: 28.12.1994
(73) Patentinhaber: Happel, Werner, D-87654 Friesenried (DE)
(72) Erfinder: Happel, Werner, D-87654 Friesenried (DE)
(74) Vertreter: Polte, Willi, Dr.-Ing. Dipl.-Ing.

(56) Entgegenhaltungen:
- EP-A- 0 306 579
- EP-B- 0 313 109
- DE-C- 3 406 878
- FR-A- 2 183 609
- US-A- 3 605 694
- US-A- 3 605 695
- US-A- 3 870 021
- US-A- 3 999 518

## Beschreibung

Die Erfindung betrifft eine Melkeinrichtung und ein Verfahren zum Betreiben einer Melkeinrichtung nach dem Oberbegriff der Ansprüche 1 bzw. 2 (siehe US-A-3 605 694, DE-C1-3406878).

Melkzeugarme 1 werden vorzugsweise in Melkständen eingesetzt, um eine optimale Position einer Melkeinheit 2 während des Melkens zu erreichen. Dies ist deshalb wichtig, weil für einen physiologischen Milchentzug nicht nur die Vakuumverhältnisse an der Zitze maßgeblich sind, sondern auch die optimalen Zug- und Haltekräfte F1, F2, die über das Melkzeug 2 auf das Euter 7 einwirken.

Bei Melkbeginn und während der Hauptmilchphase verwendet man im allgemeinen nur das Gewicht der Melkeinheit 2, wobei angestrebt wird, daß das Gewicht gleichmäßig auf alle vier Zitzen verteilt ist, um eine gleichzeitige Entleerung der einzelnen Euterviertel zu erreichen. Hierbei ist der Melkzeugarm 1 eine wesentliche Hilfe, da unerwünschte Dreh- oder Seitenkräfte ausgeglichen werden, die ohne Melkzeugarm 1, z.B. durch die Position eines Milchablaufschlauches 6, verursacht werden.

Aus der US-A-3870021 sind Melkzeugarme bekannd, die bei Nachlassen des Milchflusses zum Ausmelken durch zusätzliche Kraft nach unten F2 und/oder nach vorne F1 das Euter 7 straffen, um die im Euter verbleibende Restmilch zu verringern und die danach das Melkzeug 2 automatisch abnehmen.

Diese bekannten Melkzeugarme haben jedoch den Nachteil, daß ein erheblicher vortichtuugstechnischer Aufwand erfordenlich ist.

Um ein optimales Melken zu erreichen, ist es wünschenswert, die Belastung der Zitzen durch die Melkbecher der Melkeinheit 2 individuell und aufeinfache Weise auf das Tier abzustimmen; dies gilt ebenso für die Phase des Ausmelkens, da hier je nach Veranlagung des Tiers eine individuelle Zugkraft zur Straffung des Euters erforderlich ist.

Außerdem ändert sich das Melkverhalten der Tiere mit dem Laktationsstadium, d.h. dem zeitlichen Abstand seit dem Abkalben, was bei den herkömmlichen Melkzeugarmen nicht berücksichtigt wird.

Diese Nachteile werden durch die erfindungsgemäße Ausführung der Melkeinrichtung nach Anspruch 1 bzw durch das Verfahren zum Betreiben einer Melkeinrichtung nach Anspruch 2 vermieden.

Es ist vorgesehen, sowohl die Halte- bzw. Gewichtskraft F2 der Melkeinheit tierindividuell abzustimmen als auch bei Nachlassen des Milchflusses die zusätzliche Zugkraft F2, nach unten abzustimmen, wodurch der Ausmelkgrad verbessert wird.

Eine Möglichkeit der Durchführung für die Änderung der Zug- oder Haltekräfte F1, F2 ist die Verwendung von Druck- oder Vakuumzylindern 8,9, die entsprechend den optimalen Werten eines jeden Tieres mit verschiedenen Druckwerten beaufschlagt werden können.

Außerdem ist eine Kombination von Vakuum- oder Druckzylindern mit Zug- oder Druckfedern, aber auch mit verstellbaren Gewichten durchführbar. Eine einfache Version ist das manuelle Verstellen der Zug- oder Haltekraft F1, F2 mittels eines Betätigungshebels 3 der z.B. durch das Verändern des Hebelabstandes K der Einwirkung einer Zugfeder 4 die Krafteinwirkung des Melkzeugarmes auf das Melkzeug vorzugsweise durch eine Schnellverstellung verändert.

In der optimalen erfindungsgemäßen Ausführung der Wirkungsweise des Melkzeugarmes werden die Funktionskräfte vorzugsweise von folgenden Faktoren bestimmt:
- Basiswert eines jeden Tieres
- Laktationssstadium
- Verlauf der Milchflußkurve
- Melkdauer
- Laktationsalter.

Diese Werte werden im Rechner gespeichert und ständig aktualisiert. Voraussetzung für diese Ausführung ist eine elektronische Milchmengenmessung mit Speicherung der Daten. Die Anwendung erfolgt automatisch beim Melken. Das Tier wird beim Betreten des Melkstandes automatisch erkannt.

Eine weitere Anwendungsmöglichkeit ist, z.B. durch Ändern der Haltekräfte F2, das Abfallen des Melkzeuges, z.B. bei Tieren mit besonders kleinen Zitzen, zu verhindern.

Nach dem Melken wird das Melkzeug 2 automatisch vom Euter 7 abgenommen. Mit Hilfe dieses erfindungsgemäßen Melkarmes ist es möglich, weitgehend unabhängig von der Bedienung des Melkers einen optimalen Melkvorgang zu erreichen, der die physiologischen Gegebenheiten des Einzeltieres berücksichtigt.

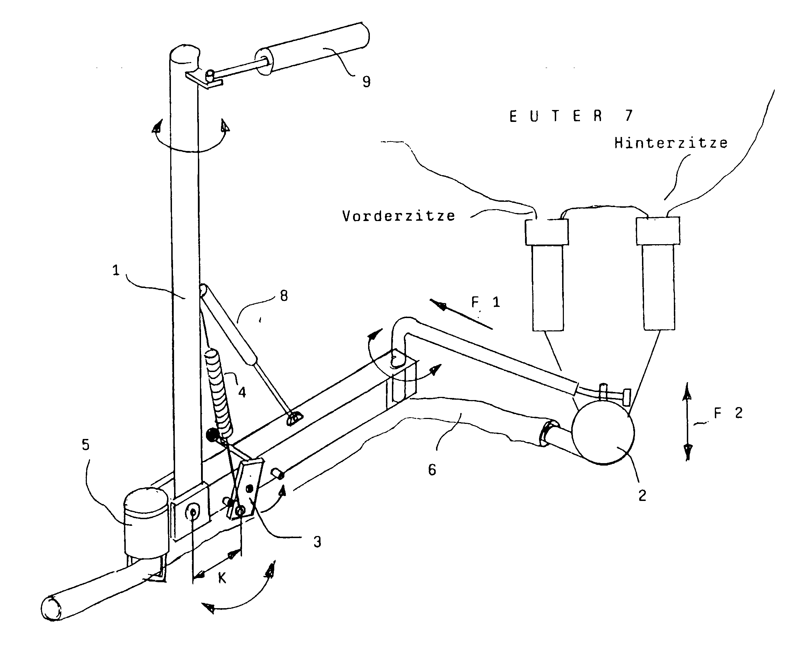

## Patentansprüche

1. Melkeinrichtung mit einem Melkzeugarm (1) zum Positionieren und Halten einer Melkeinheit (2) während des Melkens in einer Melkposition, und mit einer Verstelleinrichtung (3), über die die durch die Melkeinheit (2) auf das Euter (7) aufgebrachten Zugund/oder Haltekräfte (F1, F2) individuell während des Melkens einstellbar sind, **dadurch gekennzeichnet, daß** die Änderung der Zug- oder Haltekräfte (F1, F2) durch das Verändern der Hebellänge (K) der auf den Melkzeugarm wirkenden Funktionskräfte erreicht wird.

2. Verfahren zum Betreiben einer Melkeinrichtung mit einem Melkzeugarm (1) zum Positionieren und Halten einer Melkeinheit (2), wobei die vom Melkzeugarm (1) aufzubringenden Zug- und/oder Haltekräfte (F1, F2) in Abhängigkeit vom zu melkenden Tier, auch während des Melkens, mittels einer Verstelleinrichtung (3) eingestellt werden, **dadurch gekennzeichnet, daß** die Zug- oder Haltekräfte (F1, F2) für jedes Tier individuell abhängig vom Laktationsstadium und/oder Laktationsalter gesteuert werden.

3. Verfahren nach Patentanspruch 2, **dadurch gekennzeichnet, daß** die Zug- oder Haltekräfte in Abhängigkeit vom Verlauf der Milchkurve gesteuert werden.

4. Verfahren nach Anspruch 2 oder 3, **dadurch gekennzeichnet, daß** die Änderung der Zug- oder Hebelkräfte (F1, F2) stufenweise erfolgt.

5. Verfahren nach einem der Ansprüche 2 bis 4, **dadurch gekennzeichnet, daß** die individuellen Werte der Zug- oder Haltekräfte (F1, F2) für jeder Tier vorzugsweise in der EDV speicherbar sind und bei der Tiererkennung automatisch berücksichtigt werden.

6. Verfahren nach einem der Ansprüche 2 bis 5, **dadurch gekennzeichnet, daß** der Melkzeugarm (1) nach Beendigung des Ausmelkvorganges das Melkzeug (2) automatisch vom Euter entfernt wird.

7. Melkeinrichtung mit einem Melkzeugarm nach Anspruch 1, **gekennzeichnet durch** eine Zugfeder (4), bei der zur Änderung der Zug- oder Haltekräfte (F1, F2) der Anlenkpunkt mittels einer Wippbewegung mit vorzugsweise zwei Endanschlägen veränderbar ist.

8. Melkeinrichtung mit einem Melkzeugarm nach Anspruch 1 oder 7, **dadurch gekennzeichnet, daß** die zum automatischen Abnehmen des Melkzeugs (2) notwendige Abklemmvorrichtung (5) des Ablaufmilchschlauches (6) direkt am Melkzeugarm (1) angebracht ist.

## Claims

1. Milking device having a teat cup cluster arm (1) for positioning and holding a milking unit (2) in a milking position during milking, and having an adjustment device (3), by means of which the tensile forces and/or retention forces (F1, F2), which are applied to the udder (7) by the milking unit (2), are individually adjustable during milking, **characterised in that** the change of the tensile forces or retention forces (F1, F2) is achieved by changing the lever length (K) of the functional forces which act on the teat cup cluster arm.

2. Method for operating a milking device having a teat cup cluster arm (1) for positioning and holding a milking unit (2), the tensile forces and/or retention forces (F1, F2), which are to be applied by the teat cup cluster arm (1), being adjusted depending on the animal to be milked by means of an adjustment device (3), even during the milking operation, **characterised in that** the tensile forces or retention forces (F1, F2) for each animal are controlled individually depending on the lactation stage and/or lactation age.

3. Method according to patent claim 2, **characterised in that** the tensile forces or retention forces are controlled depending on the progression of the milk curve.

4. method according to claim 2 or 3, **characterized in that** the change of the tensile forces or retention forces (F1, F2) is effected gradually.

5. Method according to any one of claims 2 to 4, **characterised in that** the individual values of the tensile forces or retention forces (F1, F2) for each animal can preferably be stored by means of electronic data processing and are automatically taken into consideration when an animal is identified.

6. Method according to any one of claims 2 to 5, **characterised in that** the teat cup cluster arm (1) is automatically removed from the udder once the milking operation has ended.

7. Milking device having a teat cup cluster arm according to claim 1, **characterised by** a tension spring (4), wherein the articulation point can be changed by means of a rocking movement with preferably two end stops in order to change the tensile forces or the retention forces (F1, F2).

8. Milking device having a teat cup cluster arm according to claim 1 or 7, **characterised in that** the disconnecting apparatus (5) of the discharge milk hose (6), which apparatus (5) is necessary for automatically removing the teat cup cluster (2), is fitted directly to the teat cup cluster arm (1).

## Revendications

1. Dispositif trayeur avec un bras de support de gobelets trayeurs (1) pour positionner et tenir une unité de traite (2) pendant la traite dans une position de traite, et avec un dispositif de réglage (3), par lequel les forces de traction et/ou de retenue (F1, F2) appliquées par l'unité de traite (2) sur le pis (7) peuvent être réglées individuellement, pendant la traite, **caractérisé en ce que** la modification des forces de traction ou de retenue (F1, F2) est obtenue par la modification de la longueur de levier (K) des forces fonctionnelles agissant sur le bras de support de gobelets trayeurs.

2. Procédé pour actionner un dispositif de traite avec un bras de support de gobelets trayeurs (1) pour positionner et tenir une unité de traite (2), les forces de traction et/ou de retenue (F1, F2) appliquées par le bras de support de gobelets trayeurs (1) étant réglées en fonction de l'animal à traire, également pendant la traite, au moyen d'un dispositif de réglage (3), **caractérisé en ce que** les forces de traction ou de retenue (F1, F2) sont contrôlées pour chaque animal individuellement en fonction du stade de lactation et/ou de l'âge de lactation.

3. Procédé selon la revendication 2, **caractérisé en ce que** les forces de traction ou de retenue sont commandées en fonction de la courbe de débit laitier.

4. Procédé selon la revendication 2 ou 3, **caractérisé en ce que** la modification des forces de traction ou de levier (F1, F2) se fait graduellement.

5. Procédé selon l'une quelconque des revendications 2 à 4, **caractérisé en ce que** les valeurs individuelles des forces de traction ou de retenue (F1, F2) pour chaque animal peuvent être mémorisées de préférence dans le système informatique et sont prises en considération automatiquement lorsque l'animal est reconnu.

6. Procédé selon l'une quelconque des revendications 2 à 5, **caractérisé en ce que** le bras de support de gobelets trayeurs (1) retire automatiquement le faisceau trayeur (2) du pis après la fin de la traite.

7. Dispositif de traite avec un bras de support de gobelets trayeurs selon la revendication 1, **caractérisé par** un ressort de traction (4), sur lequel le point d'articulation peut être modifié au moyen d'un mouvement de bascule avec de préférence deux butées finales pour la modification des forces de traction ou de retenue (F1, F2).

8. Dispositif de traite avec un bras de support de gobelets trayeurs selon la revendication 1 ou 7, **caractérisé en ce que** le dispositif de débranchement (5) du tuyeau à lait (6) nécessaire pour retirer automatiquement le faisceau trayeur (2) est monté directement sur le bras de support de gobelets trayeurs (1).
